**Europäisches Patentamt**

**European Patent Office**

**Office européen des brevets**

(19)

(11) Veröffentlichungsnummer: **0 015 368**
**B1**

(12) # EUROPÄISCHE PATENTSCHRIFT

(45) Veröffentlichungstag der Patentschrift:
**12.09.84**

(21) Anmeldenummer: **80100248.6**

(22) Anmeldetag: **18.01.80**

(51) Int. Cl.³: **G 01 L 7/08,** G 01 L 9/10,
G 01 L 9/12

(54) **Luftdruckgeber.**

(30) Priorität: **02.02.79 DE 2903994**

(43) Veröffentlichungstag der Anmeldung:
**17.09.80 Patentblatt 80/19**

(45) Bekanntmachung des Hinweises auf die Patenterteilung:
**12.09.84 Patentblatt 84/37**

(84) Benannte Vertragsstaaten:
**DE FR GB SE**

(56) Entgegenhaltungen:
**DE - A - 2 709 945**
**DE - A - 2 728 720**
**DE - B - 2 164 896**
**DE - B - 2 556 947**

**"Handbuch für elektrisches Messen mechanischer Grössen", C. Rohrbach, VDI Verlag 1967, Düsseldorf, S. 226-7, 532-3**
**"Physikalische und Technische Akustik",E. Mayer,Vieweg u. Sohn, Braunschweig 1967,S. 248-252**
**"Lehrbuch der Experimental Physik",Band I,H. Gobrecht, Walter de Gruyter Berlin 1975,S. 523-4**
**"Mechanik für Ingenieure",Band I, H. Heyde,Teubner Verlag, Leipzig 1950,S. 253**
**"Archiv Technisches Messen",ATM, Blatt V,S. 1342-6,1972**

(73) Patentinhaber: **Albin Sprenger KG, Mühlenstrasse 47, D-3424 St. Andreasberg/Harz (DE)**

(72) Erfinder: **Bachem, Christian, Dr., Schlegelweg 7, D-3400 Göttingen (DE)**

(74) Vertreter: **Strasse, Joachim, Dipl.-Ing. et al, Strasse und Stoffregen Patentanwälte München Zweibrückenstrasse 17, D-8000 München 2 (DE)**

## Beschreibung

Die Erfindung bezieht sich auf einen Luftdruckgeber mit einem in einer Messkammer angeordneten flächenhaften Element, das elektrisch in mechanische Schwingungen bei seiner Resonanzfrequenz versetzbar ist und dessen mechanische Schwingungen in ein elektrisches Signal wandelbar sind, wobei beidseitig des flächenhaften Elements im Abstand starre Wandungen der Messkammer angeordnet sind, sich Luft unter dem zu messenden Druck beidseitig des flächenhaften Elements zwischen diesem und den starren Wandungen befindet und der Luftdruck die Resonanzfrequenz des flächenhaften Elements beeinflusst.

Ein derartiger Luftdruckgeber ist beispielsweise aus «Archiv Technisches Messen ATM», Blatt V, S. 1342–6, 1972, bekannt. Hierbei ist das flächenhafte Element als Membran ausgebildet. Wie im «Handbuch für elektrisches Messen mechanischer Grössen», C. Rohrbach, VDI-Verlag GmbH, Düsseldorf, 1967, auf S. 532 ausgeführt sind, sind Membranen Folien, die so dünn sind, dass sie praktisch keine Biegespannungen, sondern nur Zugspannungen aufweisen.

Bei dem bekannten Luftdruckgeber ist die Messkammer als Doppelkondensator ausgebildet, wobei die Erregung der geerdeten Membran und die Messung der Membranschwingung elektrostatisch erfolgt. Bei der gespannten Membran ist die membraneigene Rückstellkraft von der elastischen Radialspannung abhängig und vergleichsweise sehr klein gegenüber dem von den Luftschichten gelieferten Beitrag. Unter diesen Voraussetzungen folgt die Eigenfrequenz der Membran der Wurzel aus dem Luftdruck über mehrere Zehnerpotenzen. Jedoch hat sich gezeigt, dass die Eichstabilität nur in der Grössenordnung von einigen Prozent liegt, da der von der Membranspannung gelieferte Beitrag zur Eigenfrequenz temperatur- und alterungsabhängig ist (ATM, a.a.O.).

Die DE-A-2 728 720 beschreibt einen Grenzwertmelder für eine festlegbare Druckdifferenz, bei der eine zwischen zwei druckbeaufschlagten Kammern angeordnete Membran in Richtung des geringeren Druckes so weit ausgelenkt wird, bis bei einer bestimmten Auslenkung ein Ausgangssignal schlagartig seinen Wert ändert. Schwingungseigenschaften der Membran werden hier nicht ausgenutzt.

Bei einem in der DE-B-2 556 947 beschriebenen Luftdruckgeber bedeckt eine Membran druckabhängig mehr oder weniger ein Dielektrikum, wodurch eine druckabhängige Kapazitätsänderung als Signal zur Verfügung gestellt wird. Auch dieser Schrift sind Hinweise auf Schwingungen der Membran nicht zu entnehmen.

In der DE-C-2 709 945 ist ein Luftdruckgeber gezeigt, der aus zwei flächenhaften Elementen besteht, die durch Abstandshalter in Abstand gehalten sind. Zumindest eines der flächenhaften Elemente ist eine Membran, deren Abstand zum anderen Element sich druckabhängig ändert. Entsprechend zum Abstand variiert die Kapazität der Anordnung, woraus ein druckabhängiges Signal gewonnen wird. Wie in den beiden voranstehenden Schriften gibt es keinen Hinweis auf Schwingungseigenschaften der Membran.

Die prinzipielle Verwendung von Platten, d.h. flächenhaften Elementen, die bedeutend dicker als Membranen sind und daher im technisch interessierenden Bereich keine Zug-, sondern nur Biegespannungen aufweisen, in der Druckmessung ist aus dem bereits aufgeführten «Handbuch für elektrisches Messen mechanischer Grössen», S. 533 bekannt. Einen Hinweis auf Eignung von Platten bei gattungsgemässen Luftdruckgebern gibt diese Schrift jedoch nicht, vielmehr ist bei einem auf S. 226 dieser Schrift dargestellten Luftdruckgeber eine Membran vorgesehen.

Es ist Aufgabe der vorliegenden Erfindung, einen Luftdruckgeber der eingangs genannten Art derart weiterzubilden, dass die Messgenauigkeit erhöht wird und insbesondere Eich-Instabilitäten ausgeschlossen werden.

Die Aufgabe wird erfindungsgemäss dadurch gelöst, dass das aus federhartem Material bestehende flächenhafte Element als Platte ausgebildet ist, welche an ihrem Rand mittels Distanzringen solcher Stärke von den starren Wandungen in Abstand gehalten ist, dass die Rückstellkraft der sich beidseitig zwischen der Platte und der jeweils entsprechenden Wandung befindlichen Luft bei Atmosphärendruck etwa das Drei- bis Zehnfache der Rückstellkraft der Platte beträgt.

Durch die durch ihre Rückstellkraft vorgegebene Steife der Platte wird zwar deren Eigenfrequenzänderung eingeengt, beispielsweise auf 1:2 bei einer Luftdruckänderung zwischen 1000 Pascal (10 mb) und $10^5$ Pa (1000 mb), was für Radiowettersonden von Interesse ist, jedoch ist die Zuordnung der Eigenfrequenz zum Luftdruck genauer als 100 Pa (1 mb).

Die Rückstellkraft einer ausgelenkten eingespannten Platte hängt von vielen Parametern ab, die theoretisch nur schwer oder zumindest aufwendig bestimmbar sind, beispilsweise den Einspannverhältnissen. Mittels der erfindungsgemässen Lösung muss jedoch nur das Verhältnis zweier Grössen, der Rückstellkraft der Platte zur Rückstellkraft der Luft zwischen Platte und starrer Wandung, bestimmt werden, was erheblich einfacher und durch die Distanzringe einfach festlegbar ist.

Bei einer vorteilhaften Ausgestaltung der Erfindung ist die Platte induktiv erregbar, um mit niedrigen Speisespannungen genau arbeiten zu können.

Bei einer weiteren vorteilhaften Ausgestaltung enthält die Platte ferromagnetisches Material und in die eine starre Wandung ist ein Elektromagnet eingelassen oder auf diese aufgesetzt. Vorzugsweise besteht die andere der beiden starren Wandungen aus Isolierstoff und weist auf ihrer der Membran zugekehrten Seite eine elektrisch leitende Schicht auf, die an eine Oszillatorschaltung anschliessbar ist. Bei diesem Aufbau des Luftdruckgebers entsprechen die Platte und die elektrisch leitende Schicht den Elektroden eines Kondensatormikrofons, um die gewonnene Wechselspannung dem Magneten über einen Verstärker zuzuführen.

Der Druckausgleich der zwischen der Membran und den starren Wandungen eingeschlossenen Luft und der zu messenden Aussenluft erfolgt in einer weiteren vorteilhaften Ausgestaltung der Erfindung über zwischen der Platte und den Distanzringen vorgesehene feine Rillen, die sich z. B. in einer parallel zur Platte in der Messkammerwandung verlaufenden Bohrung fortsetzen.

Bei einer weiteren vorteilhaften Ausgestaltung der Erfindung sind in den Wandungen derart angeordnete muldenförmige Ausnehmungen vorgesehen, dass der Abstand zwischen der Platte und den Wandungen von der Mitte der Platte zu ihrem Rand abnimmt. Hierdurch wird eine Erhöhung der Messgenauigkeit erreicht.

Die Erfindung wird nachstehend anhand der Beschreibung eines zeichnerisch dargestellten Ausführungsbeispiels näher erläutert.

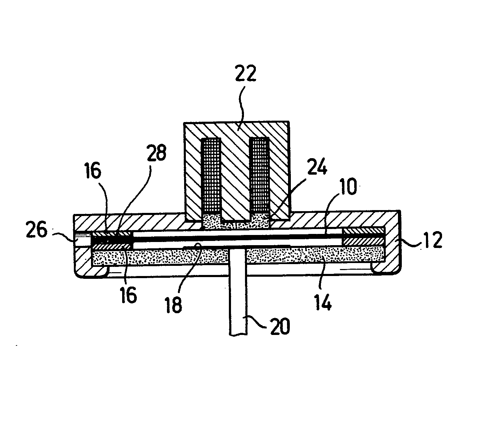

In der Figur ist ein Luftdruckgeber im Schnitt dargestellt. In einer Messkammer ist eine aus federhartem Material ausgebildete Platte 10 angeordnet, die zwischen einer metallischen Wandung 12 und einer aus Isolierstoff bestehenden Wandung 14 eingespannt und an ihrem Rande zwischen Distanzringen 16 liegt, die die Dicke der beidseitig der Platte 10 liegenden Luftpolster bestimmen. Die aus metallischem Material bestehende Wandung 12 ist dabei als Teil einer flachen zylinderförmigen Metallkapsel ausgebildet, die die aus Isolierstoff bestehende Wandung 14 umgreift. Der an die Wandung 14 angrenzende Bodenbereich weist dabei eine vorzugsweise kreisrunde Öffnung auf. Die aus Isolierstoff bestehende Wandung 14 trägt eine dünne elektrisch leitende Schicht 18, die über eine von Isolierstoff erfüllte Bohrung 20 elektrisch nach aussen geführt ist. Die metallische Wandung 12 weist einen Elektromagneten 22 auf, der luftdicht eingeführt und mit einem Isolierstück 24 mit der der Membran 10 zugewandten Innenfläche der Wandung 12 fluchtet.

Selbstverständlich kann der Aufbau der Elemente 10, 12, 14–16 auch anders erfolgen, wie z. B. als ebene Platten und Ringe, die verklebt werden, anstatt entsprechend dem Ausführungsbeispiel durch Umbördeln des Randes der Wandung 12 der Kapsel die Elemente aufeinanderzupressen.

Um einen Druckausgleich zwischen der in den Schichten zwischen der Platte 10 und den Innenflächen der Wandungen 12 und 14 eingeschlossenen Luft und der zu messenden Aussenluft zu ermöglichen, weist die zylinderförmige Metallkapsel auf der Umfangsfläche im Bereich der Distanzringe 16 eine Bohrung 26 auf, die sich in feine Rillen 28 zur Verbindung mit den Bereichen innerhalb der Messkammer fortsetzt.

Zur Erregung der Platteneigenschwingung eignet sich ein Verstärker, dessen Ausgang auf den Magneten 22 wirkt, wobei dessen Eingang mit der eigenfrequenten Wechselspannung gespeist wird. Diese erhält man durch die Ausgestaltung der Platte 10 und der auf der aus Isolierstoff bestehenden Wandung 14 angeordneten elektrisch leitenden Schicht 18, die wie Elektroden eines Kondensatormikrofons wirken. Zu diesem Zweck wird vorzugsweise die Fassung der Platte als ein elektrischer Kontakt und die durch die von Isolierstoff gefüllte Bohrung 20 geführte elektrische Verbindung als anderer elektrischer Kontakt verwendet.

Die magnetische Erregung der Platte 10 eignet sich für den Betrieb mit niedrigen Speisespannungen besser als deren kapazitive Erregung, wobei ausserdem zusätzlich die metallische Wandung 12 als metallbelegte Isolierstoffschicht ausgebildet sein müsste.

Sind in den Wandungen geeignete muldenförmige Ausnehmungen vorgesehen, so weisen die Luftschichten beiderseits der Platte 10 eine von der Mitte zum Rand hin abnehmende Dicke auf, die annähernd proportional zur Durchbiegung der am Rande eingespannten Platte 10 verläuft. Zu diesem Zweck können in die Wandungen 12 und 14 Mulden gemäss Besselfunktion $I_o$ eingeschliffen werden.

**Patentansprüche**

1. Luftdruckgeber mit einem in einer Messkammer angeordneten flächenhaften Element, das elektrisch in mechanische Schwingungen bei seiner Resonanzfrequenz versetzbar ist und dessen mechanische Schwingungen in ein elektrisches Signal wandelbar sind, wobei beidseitig des flächenhaften Elements im Abstand starre Wandungen der Messkammer angeordnet sind, sich Luft unter dem zu messenden Druck beidseitig des flächenhaften Elements zwischen diesem und den starren Wandungen befindet und der Luftdruck die Resonanzfrequenz des flächenhaften Elements beeinflusst, dadurch gekennzeichnet, dass das aus federhartem Material bestehende flächenhafte Element als kreisrunde Platte (10) ausgebildet ist, welche an ihrem Rand mittels Distanzringen (16) solcher Stärke von den starren Wandungen (12, 14) in Abstand gehalten ist, dass die Rückstellkraft der beidseitig zwischen der Platte (10) und der jeweils entsprechenden Wandung (12, 14) befindlichen Luft bei Atmosphärendruck etwa das Drei- bis Zehnfache der Rückstellkraft der Platte (10) beträgt.

2. Luftdruckgeber gemäss Anspruch 1, dadurch gekennzeichnet, dass die Platte (10) induktiv in mechanische Schwingungen versetzbar ist.

3. Luftdruckgeber gemäss Anspruch 2, dadurch gekennzeichnet, dass die Platte (10) ferromagnetisches Material enthält und ein Elektromagnet (22) in die eine starre Wandung (12) eingelassen oder auf diese aufgesetzt ist.

4. Luftdruckgeber gemäss Anspruch 2 oder 3, dadurch gekennzeichnet, dass die andere starre Wandung (14) aus Isolierstoff besteht und auf ihrer der Platte (10) zugekehrten Seite eine elektrisch leitende Schicht aufweist.

5. Luftdruckgeber gemäss Anspruch 1 oder einem der folgenden Ansprüche, dadurch gekennzeichnet, dass zwischen der Platte (10) und den Distanzringen (16) feine Rillen (28) zum Druckausgleich der Luft unter dem zu messenden Druck mit der Aussenluft vorgesehen sind.

6. Luftdruckgeber gemäss Anspruch 1 oder einem der folgenden Ansprüche, dadurch gekennzeichnet, dass in den Wandungen (12, 14) derart angeordnete muldenförmige Ausnehmungen vorgesehen sind, dass der Abstand zwischen der Platte (10) und den Wandungen (12, 14) von der Mitte der Platte (10) zu ihrem Rand abnimmt.

## Claims

1. Air pressure indicator with a laminar element arranged in a measuring chamber, which element is capable of being set electrically into mechanical oscillation at its resonance frequency and the mechanical oscillations of which are convertible into an electric signal, in which on both sides of the laminar element rigid walls of the measuring chamber are arranged, at a distance, air is situated at the pressure to be measured on both sides of the laminar element between the latter and the rigid walls and the air pressure influences the resonance frequency of the laminar element, characterized in that the laminar element, consisting of elastic material, is constructed as a circular plate (10), which on its rim is kept at a distance from the rigid walls (12, 14) by spacer rings (16) of such a thickness that the restoring force of the air located on both sides between the plate (10) and the respectively corresponding wall (12, 14) at atmospheric pressure amounts to approximately three to ten times the restoring force of the plate (10).

2. Air pressure indicator according to Claim 1, characterized in that the plate (10) is capable of being set into mechanical oscillation inductively.

3. Air pressure indicator according to Claim 2, characterized in that the plate (10) contains ferromagnetic material and an electro-magnet (22) is let into one rigid wall (12) or is placed on it.

4. Air pressure indicator according to Claim 2 or 3, characterized in that the other rigid wall (14) consists of insulating material and on its side facing the plate (10) has an electrically conducting layer.

5. Air pressure indicator according to Claim 1 or one of the following claims, characterized in that between the plate (10) and the spacer rings (16) fine grooves (28) are provided to equalize the pressure of the air under the pressure which is to be measured with the external air.

6. Air pressure indicator according to Claim 1 or one of the following claims, characterized in that Trough-shaped recesses are provided in the walls (12, 14) arranged such that the distance between the plate (10) and the walls (12, 14) diminishes from the centre of the plate (10) to its rim.

## Revendications

1. Dispositif de mesure de la pression de l'air comprenant un élément essentiellement en forme de surface qui est placé dans une chambre de mesure et qui peut osciller mécaniquement à sa fréquence de résonance sous l'action d'un dispositif électrique, ces oscillations mécaniques étant transformables en un signal électrique, la chambre de mesure comportant, des deux côtés et à une certaine distance de l'élément en forme de surface, des parois rigides, l'air dont la pression doit être mesurée, occupant l'espace compris, des deux côtés de l'élément en forme de surface, entre cet élément et les parois rigides et la pression de l'air déterminant la fréquence de résonance de l'élément en forme de surface, caractérisé en ce que l'élément en forme de surface, constitué par un matériau élastique dur, a la forme d'une plaque circulaire (10) maintenue, dans sa zone marginale, à une certaine distance des parois rigides (12, 14) par des anneaux de maintien à distance (16) dont l'épaisseur est telle que la force de rappel de l'air qui occupe l'espace compris, des deux côtés de la plaque (10), entre cette plaque et les parois (12, 14) est, à la pression atmosphérique, de trois à dix fois plus grande que la force de rappel de la plaque (10).

2. Dispositif suivant la revendication 1 caractérisé en ce que les oscillations mécaniques de la plaque (10) peuvent être provoquées par induction.

3. Dispositif suivant la revendication 2 caractérisé en ce que la plaque (10) contient un matériau ferromagnétique et un électro-aimant (22) est logé dans l'une des parois rigides (12) ou monté sur elle.

4. Dispositif suivant l'une quelconque des revendications 2 ou 3 caractérisé en ce que l'autre paroi rigide est constituée par un matériau isolant et comporte, sur sa surface tournée vers la plaque (10), une couche conductrice de l'électricité.

5. Dispositif suivant l'une quelconque des revendications précédentes caractérisé en ce qu'entre la plaque (10) et les anneaux de maintien à distance (16), de fines rainures (28) assurent la compensation de la pression entre l'air soumis à la pression à mesurer et l'air extérieur.

6. Dispositif suivant l'une quelconque des revendications précédentes caractérisé en ce que les parois (12, 14) comportent des évidements en forme de maie disposés de telle manière que la distance entre la plaque (10) et les parois (12, 14) diminue depuis le milieu de la plaque (10) jusqu'à son bord.